# EUROPEAN PATENT APPLICATION

(11) **EP 4 249 241 A1**
(43) Date of publication of application: **27.09.2023**
(21) Application number: 21894575.6
(22) Date of filing: 12.11.2021
(51) Int. Cl.: B32B 27/00, B32B 27/18, B32B 27/32, E04F 13/07, E04F 13/08

(54) **DECORATIVE SHEET, DECORATIVE TACK SHEET, DECORATIVE PANEL, AND MANUFACTURING METHOD FOR DECORATIVE SHEETS**

(30) Priority: 18.11.2020 JP 2020191684
(71) Applicant: TOPPAN INC., Tokyo 110-0016 (JP)
(72) Inventor: TOGASAKI, Hiromasa, Tokyo 110-0016 (JP); KAWANISHI, Yui, Tokyo 110-0016 (JP)
(74) Representative: Hoffmann Eitle
(86) International application number: PCT/JP2021/041788
(87) International publication number: WO 2022/107701

(57) **Abstract**

The present invention relates to a decorative sheet, a decorative tack sheet, a decorative panel, and a manufacturing method for decorative sheets, and, by adding a dispersant as a nano-sized additive, the present invention not only makes it possible to reduce the number of manufacturing steps, but also makes it possible to provide a thin but hard decorative sheet. In a decorative sheet (10), a printed pattern layer (50) on which a pattern is printed is formed on a rear surface side of a transparent original plate (20) formed of a transparent olefin sheet, a surface protective layer (60) is formed on the front surface side of the transparent original plate (20), a laminate layer formed of another film is not present on either the front surface side or the rear surface side of the transparent original plate (20), and a dispersant as a nano-sized additive is added to the transparent original plate (20). On the rear surface side of the transparent original plate (20), a printed pattern layer (50) and a concealing layer (a coloring layer 40) may be formed in sequence, or a primer layer (30) may be formed on a side farthest away from the printed pattern layer (50).

## Description

### Technical Field

The present invention relates to a decorative sheet used, for example, indoors by being applied to the surfaces of fixtures, fixture materials, and the like to match the pattern of the fixtures and fixture materials for a house or each room therein, a decorative tack sheet, a decorative panel, and a manufacturing method for decorative sheets. By adding a dispersant as a nano-sized additive, the present invention not only makes it possible to reduce the number of manufacturing steps, but also makes it possible to provide a thin but hard decorative sheet.

### Background Art

In the related art, decorative sheets made of olefin-based materials have been mainly used in recent years due to the problem of gases during combustion (refer to PTLs 1 to 3).

In order to protect patterns from surface abrasion, decorative sheets having a plurality of layers in which a transparent olefin sheet is fixed over a printed sheet on a colored olefin sheet are widely used (refer to paragraph [0034] and FIG. 1 of PTL 2 and to paragraph [0059] and FIG. 1 of PTL 3).

### Citation List

### Patent Literatures

PTL 1: JP 2006-110929 A
PTL 2: JP 2015-199313 A
PTL 3: JP 2016-101663 A

### Summary of Invention

### Technical Problem

In the manufacturing of the decorative sheets of the related art described above, the first problem was that a printing step and a laminating step were necessary.

In consideration of the first problem, the present invention makes the decorative sheet into a single layer film printed on the rear surface of a transparent olefin sheet, thereby eliminating the laminating step and making it possible to reduce the number of manufacturing steps from printing to imparting a surface protective layer and making in-line manufacturing in a single step possible, for example.

As a result, according to the present invention, there is an advantage in that it is possible for the surface protective layer to be synchronized with a pattern by being gloss/matte coated, according to necessity.

In addition, in the related art, there is a second problem in that, due to the plurality of layers, there is also a limit on the film formation when the sheet is made to be a thinner film and it is not possible to obtain sheet hardness.

Furthermore, in the related art, there is a third problem in that, due to the limit on the film formation of the sheet, it is difficult to match prints due to stretching of the thin film sheet and it is not possible to obtain hardness for the sheet, resulting in inferior surface physical properties when being made into a decorative panel.

In consideration of the first to third problems described above, the present invention is made to be a single layer such that it is easy to make a thinner film and, furthermore, a dispersant as a nano-sized additive is added such that it is possible to make the sheet hard even as a thin film.

### Solution to Problem

A decorative sheet according to an aspect of the present invention is a decorative sheet including a transparent original plate formed of a transparent olefin sheet, in which a printed pattern layer on which a pattern is printed is formed on a rear surface side of the transparent original plate, a surface protective layer is formed on a front surface side of the transparent original plate, a laminate layer formed of another film is not present on either the front surface side or the rear surface side of the transparent original plate, and a dispersant as a nano-sized additive is added to the transparent original plate.

In addition, in the decorative sheet according to an aspect of the present invention, the printed pattern layer and a concealing layer are formed in sequence on the rear surface side of the transparent original plate.

In the decorative sheet according to an aspect of the present invention, a primer layer is formed on the rear surface side of the transparent original plate at a side farthest away from the printed pattern layer.

A decorative sheet according to an aspect of the present invention is a decorative sheet including a transparent original plate formed of a transparent olefin sheet, in which only a printed pattern layer on which a pattern is printed and a concealing layer are formed in this sequence on a rear surface side of a transparent original plate, only a surface protective layer is formed on a front surface side of the transparent original plate, and a dispersant as a nano-sized additive is added to the transparent original plate.

A decorative sheet according to an aspect of the present invention is a decorative sheet, including a transparent original plate formed of a transparent olefin sheet, in which only a printed pattern layer on which a pattern is printed, a concealing layer, and a primer layer are formed in this sequence on a rear surface side of a transparent original plate, only a surface protective layer is formed on a front surface side of the transparent original plate, and a dispersant as a nano-sized additive is added to the transparent original plate.

In the decorative sheet according to an aspect of the present invention, the transparent original plate is three layers of two kinds deposited in a sequence of a transparent skin layer, a transparent core layer, and a transparent skin layer.

In the decorative sheet according to an aspect of the present invention, the dispersant is added to the transparent skin layers.

In the decorative sheet according to an aspect of the present invention, a sealer layer for improving adhesion with the printed pattern layer is formed between the rear surface side of the transparent original plate and the printed pattern layer.

In the decorative sheet according to an aspect of the present invention, the dispersant as a nano-sized additive includes a nucleating agent vesicle in which a nano-sized nucleating agent is encapsulated in the vesicle.

In the decorative sheet according to an aspect of the present invention, an inorganic filler is added to the transparent skin layer.

In the decorative sheet according to an aspect of the present invention, an embossed portion synchronized with the pattern is formed on a front surface side of the surface protective layer.

In the decorative sheet according to an aspect of the present invention, the embossed portion extends from the front surface side of the surface protective layer toward the transparent original plate and partially penetrates the transparent original plate.

In the decorative sheet according to an aspect of the present invention, the printed pattern layer is a single color.

In a decorative tack sheet according to another aspect of the present invention, an adhesive layer and a release paper are formed on the primer layer side of the decorative sheet.

In a decorative panel according to still another aspect of the present invention, a substrate is adhered to the primer layer side of the decorative sheet.

A manufacturing method for decorative sheets according to still another aspect of the present invention includes a first step for manufacturing a transparent original plate formed by extrusion molding a transparent polyolefin-based thermoplastic resin to which a dispersant as a nano-sized additive is added, a second step for forming a printed pattern layer on a rear surface side of the transparent original plate manufactured in the first step, and a third step for forming a surface protective layer on a front surface side of the transparent original plate after the second step or before the second step, in which the manufacturing is carried out in-line.

A manufacturing method for decorative sheets according to an aspect of the present invention includes a first step for manufacturing a transparent original plate formed by extrusion molding a transparent core layer using a transparent polypropylene-based thermoplastic resin and transparent skin layers in which a dispersant as a nano-sized additive is added to the thermoplastic resin, each positioned on the surface and rear surface sides of the transparent core layer, a second step for forming a printed pattern layer on the rear surface side of the transparent original plate manufactured in the first step, and a third step for forming a surface protective layer on the front surface side of the transparent original plate after the second step or before the second step, in which the manufacturing is carried out in-line.

In the manufacturing method for decorative sheets according to an aspect of the present invention, in the second step, the printed pattern layer and a concealing layer are formed in this sequence on the rear surface side of the transparent original plate.

In the manufacturing method for decorative sheets according to an aspect of the present invention, in the second step, a primer layer is formed on the rear surface side of the transparent original plate at the side farthest away from the printed pattern layer.

In the manufacturing method for decorative sheets according to an aspect of the present invention, in the first step, the dispersant as a nano-sized additive includes a nucleating agent vesicle in which a nano-sized nucleating agent is encapsulated in the vesicle.

### Advantageous Effects of Invention

According to an aspect of the present invention, by adding a dispersant as a nano-sized additive, it is possible to not only reduce the number of manufacturing steps, but also to provide a thin but hard decorative sheet.

### Brief Description of Drawings

FIG. 1 is a cross-sectional view of a decorative sheet according to embodiment 1;
FIG. 2 is a cross-sectional view of a decorative sheet according to embodiment 2;
FIG. 3 is a cross-sectional view of a decorative sheet according to embodiment 3; and
FIG. 4 is a cross-sectional view of a decorative sheet according to embodiment 4.

### Description of Embodiments

### (Embodiment 1)

A description will be given below of an embodiment of the present invention (referred to below as "embodiment 1") with reference to the drawings.

Here, the drawings are schematic and the relationship between the thickness and planar dimensions, the thickness ratio of each layer, and the like differ from in practice. In addition, the embodiments illustrated below are examples of configurations to embody the technical concept of the present invention and the technical concept of the present invention is not specific to the materials, shapes, structures, and the like of the constituent parts as described below. It is possible to make various changes to the technical concept of the present invention within the technical scope defined by the claims as described in the scope of claims.

### (Decorative sheet 10 according to embodiment 1)

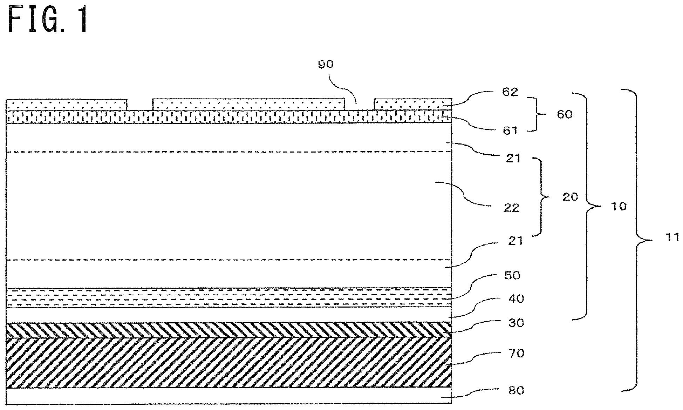

In FIG. 1, 10 is a decorative sheet, which, although not illustrated in the drawing, is used, for example, indoors by being applied to the front surfaces of fixtures (interior doors, entrance storage), fixture materials (trims, wall trims, skirting boards, window frames, and door frames), and the like to match the pattern of the fixtures and fixture materials for a house or each room therein.

The decorative sheet 10 includes the following layers, each layer being provided in sequence from (1).

The following (1) to (5) are described below.
(1) Primer layer 30
(2) Coloring layer 40
(3) Printed pattern layer 50
(4) Transparent original plate 20
(5) Surface protective layer 60

The layers of the decorative sheet 10 are not limited to (1) to (5) described above, for example, as illustrated in FIG. 1, (6) an adhesive layer 70 and (7) a release paper 80 may be added to the primer layer 30 side to make a decorative tack sheet 11; an embossed portion 90 synchronized with the pattern of the printed pattern layer 50 may be formed on the front surface side of the surface protective layer 60; or, although not illustrated in the drawings, a substrate may be adhered to the primer layer 30 side to make a decorative panel.

In addition, the "(1) Primer layer 30" described above may be omitted. That is, when the "(2) Coloring layer 40" described above functions as a primer layer, it is possible to omit the primer layer 30.

### (Transparent original plate 20)

The transparent original plate 20 is a support for the decorative sheet 10 and is formed of a transparent olefin sheet.

As illustrated in FIG. 1, the transparent original plate 20 is manufactured with three layers of two kinds in the sequence of a transparent skin layer 21, a transparent core layer 22 made of transparent polypropylene, and another transparent skin layer 21.

The transparent skin layers 21 are formed by adding a dispersant as a nano-sized additive to a transparent polypropylene-based thermoplastic resin. In addition, in addition to the dispersant as a nano-sized additive, an inorganic filler is added to the transparent skin layers 21.

### (Main features of decorative sheet 10)

The main features of the decorative sheet 10 according to the present embodiment 1 are as follows.
(1) The decorative sheet 10 according to the present embodiment 1 is a decorative sheet in which the printed pattern layer 50 on which a pattern is printed, the coloring layer 40, and the primer layer 30 are formed in sequence on a rear surface side of the transparent original plate 20 which is a single layer film formed of a transparent olefin sheet, the surface protective layer 60 is formed on a front surface side of the transparent original plate 20, and a laminate layer formed of another film is not present on either the front surface side or the rear surface side of the transparent original plate 20, in which the transparent original plate 20 is manufactured by extrusion molding using a transparent polypropylene-based thermoplastic resin to have a configuration of three layers of two kinds in the sequence of the transparent skin layer 21, the transparent core layer 22, and the transparent skin layer 21, and a dispersant as a nano-sized additive is added to the transparent skin layers 21.

According to the present embodiment 1, when manufacturing the decorative sheet 10, since there is no step for laminating other sheets, it is possible to perform the manufacturing steps from printing to imparting the surface protective layer 60 in one in-line step.

In addition, according to the present embodiment 1, it is also possible for the surface protective layer 60 to be synchronized with a pattern by being gloss/matte coated, according to necessity.

Furthermore, according to the present embodiment 1, since the decorative sheets of the related art have a plurality of layers, there is a problem in that there is a limit on the film formation when the sheet is made to be a thinner film and it is not possible to obtain sheet hardness; however, the decorative sheet 10 according to the present embodiment 1 is a single layer, thus, it is easy to make a thinner film and, furthermore, using a nano-sized additive makes it possible to make the sheet hard even as a thin film.

(2) In the decorative sheet 10 according to the present embodiment 1, in addition to the dispersant as a nano-sized additive, an inorganic filler is added.

According to the present embodiment 1, it is possible to make a thinner film and improve the anti-scratch performance.

(3) In the decorative sheet 10 according to the present embodiment 1, the embossed portion 90 synchronized with the pattern of the printed pattern layer 50 is formed.

While the decorative sheets of the related art have a plurality of layers and it is thus difficult to synchronize the expression of the imparted printed pattern layer 50 and the surface protective layer 60 on the laminate film front surface, according to the present embodiment 1, it is easy to carry out synchronization by imparting the pattern print and the embossed portion 90 on the surface and rear surface sides of the transparent original plate 20, which is a transparent olefin sheet, in an in-line manner.

(4) According to the present embodiment 1, first, when the frame material is a single color, it is possible to coordinate in advance with whatever door pattern is inside, thus, it is possible to decide the door pattern later, or, when the door changes due to aging, it is also possible to react by changing only the door, without breaking down and replacing the frame material. Of course, it is also possible for the door itself to be a single color. In addition, according to the present embodiment 1, there is a second advantage in using single-color sheets since using a single unified color for all rooms makes it easier to increase productivity by increasing the lot size and to lower the unit price, even in apartments or the like.

Furthermore, according to the present embodiment 1, third, in a case where there is a desire to change to a wood-grain tone after finishing in white, it is also possible to change to a wood-grain tone later since the decorative sheet 10 according to the present embodiment 1 is thin but hard.

For example, in a case where there is a desire to change the front surface of a decorative panel finished in white to a wood-grain tone later, it is also possible to change to a wood-grain tone by fixing the decorative tack sheet 11 according to the present embodiment 1 thereon.

(5) In the decorative sheet 10 according to the present embodiment 1, since the coloring layer 40 is transparent or translucent, by carrying out the fixing at a location where the substrate is natural wood or a wood-grain tone sheet, it is possible to improve the performance and further improve the design while utilizing the substrate design.

(6) Since the decorative tack sheet 11 according to the present embodiment 1 has the adhesive layer 70 and the release paper 80 on the primer layer 30 side, it is possible to carry out adhesion easily and quickly.

(7) In the decorative panel according to the present embodiment 1, since the substrate is adhered to the primer layer 30 side, easy and quick use as a decorative panel is possible.

(8) Using the method for manufacturing the decorative sheet 10 according to the present embodiment 1, it is possible to easily and quickly manufacture the highly functional decorative sheet 10.

### (Primer Layer 30)

As illustrated in FIG. 1, the primer layer 30 is positioned on the rear surface side of the transparent original plate 20 and is provided mainly for the purpose of improving adhesion.

In addition to improving adhesion, the functions of the primer layer 30 also include stabilizing the surface after a surface treatment, preventing corrosion of metal surfaces, imparting adhesiveness, preventing adhesive deterioration, and the like.

The primer layer 30 is formed, for example, by coating a urethane-based resin to have a solid content of 1 g/m² by a gravure printing method.

### (Coloring layer 40)

As illustrated in FIG. 1, the coloring layer 40 is positioned on the front surface of the primer layer 30 and is a concealing layer formed using a printing method and provided mainly for the purpose of imparting a concealment property.

The coloring layer 40 is printed using a two-component urethane-based resin by a gravure printing method, for example.

The coloring layer 40 may be a solid layer.

### (Printed pattern layer 50)

As illustrated in FIG. 1, the printed pattern layer 50 is positioned on the front surface of the coloring layer 40, is formed using a printing method, and is provided for the purpose of imparting a design to the decorative sheet 10.

The printed pattern layer 50 is, for example, printed with a pattern using a urethane-based resin by a gravure printing method.

Although the gravure printing method is illustrated as an example, the printing method is not limited thereto and it is possible to apply various printing methods such as the offset printing method, the letterpress printing method, the flexographic printing method, the screenprinting method, the ink jet printing method, and the electrostatic printing method, for example.

The type of pattern of the printed pattern layer 50 is arbitrary depending on the purpose of use, the user's preference, and the like and, for example, wood-grain patterns, stone-grain patterns, abstract patterns, and the like are common. The type of pattern is not limited to the types illustrated above and may be, for example, solid printing on the entire surface or the like.

As the printing inks used in the printing method, for example, vinyl chloride-based inks (cyan, magenta, and yellow) are used.

Although urethane-based resins are illustrated as examples, the printing inks are not limited thereto and, for example, may be coloring agents such as organic or inorganic dyes or pigments or the like, and may be formed by being dispersed in a binding agent formed of a synthetic resin or the like along with appropriate additives such as filling agents, adhesive agents, plasticizers, stabilizers, dispersants, antifoaming agents, leveling agents, surfactants, and drying agents, as well as solvents, diluents, or the like.

### (Surface protective layer 60)

The surface protective layer 60, also called a top coat, is positioned on the front surface side of the transparent original plate 20 as illustrated in FIG. 1, is formed using a printing method, and is provided for the purpose of imparting surface physical properties such as abrasion resistance and water resistance.

As illustrated in FIG. 1, the surface protective layer 60 is formed of an undercoat layer 61, which is coated on the front surface of the transparent original plate 20, and a top coating layer 62, which is coated on the front surface of the undercoat layer 61 and has a higher gloss than the undercoat layer 61.

For the undercoat layer 61, an acrylic two-component curable resin (acrylic urethane resin manufactured by DIC Graphics Corporation) is coated to have a thickness of 6 um.

For the top coating layer 62, the same resin with a higher gloss is coated and printed with a pattern synchronized with the printed pattern layer 50.

That is, it is also possible for the surface protective layer 60 to be synchronized with a pattern by being gloss/matte coated.

In addition, on the front surface of the top coating layer 62, the embossed portion 90 synchronized with the pattern of the printed pattern layer 50 may be formed.

Here, the term "embossed portion 90" evokes an image of a reasonable difference in height, but the difference in height between the undercoat layer 61 and the top coating layer 62 synchronized with the pattern is actually only a difference in height in the order of a few um and has the same meaning as the expression synchronized with the pattern by gloss/matte coating the surface protective layer 60.

Furthermore, the surface protective layer 60 is subjected to an antiviral treatment.

For the antiviral treatment, an antiviral agent is added to the surface protective layer 60. For example, as the antiviral agent, a silver-based inorganic additive (Biocide TB-B100) manufactured by Taisho Technos Co., Ltd., which is loaded with silver ions, is used.

Here, for the adding of the antiviral agent to the surface protective layer 60, since the surface protective layer 60 is formed of the undercoat layer 61 and the top coating layer 62, the antiviral agent may be added to both the undercoat layer 61 and the top coating layer 62, or may be added only to the top coating layer 62 positioned on the front surface side of the surface protective layer 60.

Although the antiviral agent was added to the surface protective layer 60, without being limited thereto, the antiviral agent may be coated on the front surface side of the surface protective layer 60 and at least on the front surface of the top coating layer 62.

### (Transparent core layer 22)

The transparent original plate 20 is represented in the drawing as though the transparent core layer 22 and the transparent skin layers 21 form separate layers, but in practice, the transparent core layer 22 and the transparent skin layers 21 are continuous, single layer sheets with no interface.

In the transparent core layer 22, for example, a transparent polypropylene resin blended with a weathering agent is used.

The transparent original plate 20 is formed of a single layer film (transparent skin layer 21/transparent core layer 22/transparent skin layer 21) formed of a transparent olefin sheet, but is not limited thereto and may, although not illustrated in the drawings, be formed of a single layer film (transparent layer) formed of a transparent olefin sheet, for example. At this time, the single layer film (transparent layer) corresponds to the transparent original plate 20.

In the "transparent layer" of the above single layer film (transparent layer), a dispersant as a nano-sized additive is added in the same manner as the transparent skin layer 21 described below. In addition, the "transparent layer" is also blended with a weathering agent in the same manner as the transparent core layer 22 described below.

### (Transparent skin layer 21)

In the transparent skin layers 21, a transparent polypropylene resin is used to which an inorganic filler is added in addition to the dispersant as a nano-sized additive.

The transparent skin layer 21: transparent core layer 22: transparent skin layer 21 are extruded simultaneously with a thickness ratio of 0.5:9:0.5 to produce the transparent original plate 20 with a total thickness of 50 µm.

### (Resin material of transparent core layer 22)

Examples of the resin material forming the transparent core layer 22 include a thermoplastic resin. The thermoplastic resin is not particularly limited and it is possible to use the same material as the thermoplastic resin used as the base material layer or the like in the decorative sheet 10 of the related art.

As the thermoplastic resin, for example, it is possible to use polyolefin resins such as polyethylene, polypropylene, polymethylpentene, polybutene, ethylenepropylene copolymers, ethylene-α-olefin copolymers, and propylene-α-olefin copolymers; polyester-based resins such as polyethylene terephthalate, polybutylene terephthalate, polytetramethylene terephthalate, polyethylene naphthalate, polyethylene terephthalate-isophthalate copolymers, 1,4-cyclohexanedimethanol copolymerized polyethylene terephthalate, polyarylate, and polycarbonate; polyolefin-based resins such as olefin-based copolymer resins such as ethylene-vinyl acetate copolymers, ethylene-vinyl alcohol copolymers, ethylene-(meth)acrylic acid (ester) copolymers, and ethylene-unsaturated carboxylic acid copolymer metal neutralized products (ionomers); acrylic-based resins such as poly(meth)acrylonitrile, polymethyl(meth)acrylate, polyethyl(meth)acrylate, polybutyl(meth)acrylate, and polyacrylamide; polyamide-based resins such as 6-nylon, 6,6-nylon, and 6,10-nylon; styrene-based resins such as polystyrene, AS resin, and ABS resin; vinyl-based resins such as polyvinyl chloride, polyvinyl acetate, polyvinyl alcohol, polyvinyl acetal, and polyvinyl butyral; fluoride-based resins such as polyvinyl fluoride, polyfluoride vinylidene, polytetrafluoroethylene, ethylene-tetrafluoroethylene copolymers, and ethylene-perfluoroalkyl vinyl ether copolymers, and the like; or mixtures, copolymers, composites, multi-layer bodies, and the like of two or more of the above.

Among the above, in consideration of the recent increase in social concern regarding environmental issues, it is not preferable to use thermoplastic resins containing chlorine (halogen) such as polyvinyl chloride resin as the thermoplastic resins and it is preferable to use non-halogenated thermoplastic resins.

In particular, in terms of various physical properties, processability, versatility, economy, and the like, it is most preferable to use polyester-based resins (amorphous or biaxially oriented) or polyolefin-based resins, in particular, polyolefin-based resins, as the non-halogenated thermoplastic resins. For example, as a polyolefin-based resin, it is preferable to use a polypropylene resin including 30% by mass or more and 100% by mass or less of a highly crystalline homopolypropylene resin having an isotactic pentad fraction (mmmm fraction) of 95% or more.

One type or more selected from various additives, such as, for example, fillers, ultraviolet absorbers, light stabilizers, heat stabilizers, antioxidants, antistatic agents, lubricants, flame retardants, antibacterial agents, antimold agents, antifriction agents, light scattering agents, and gloss adjustment agents may be added to the transparent core layer 22, according to necessity.

### (Resin material of transparent skin layer 21)

Examples of the resin material forming the transparent skin layer 21 include thermoplastic resins. The thermoplastic resin is not particularly limited and it is possible to use the same resin material as for the transparent core layer 22.

### (Nano-sized additives and the like (nucleating agents))

In addition to a dispersant as a nano-sized additive, the transparent skin layer 21 includes an inorganic filler, also referred to below as a "nano-sized nucleating agent".

The nano-sized nucleating agent is preferably used by being added to the polypropylene resin in the form of a nucleating agent vesicle, in which the nano-sized nucleating agent is encapsulated in a vesicle that is provided with a single layer outer film.

In addition, in the present embodiment 1, the nucleating agent in the resin forming the transparent skin layer 21 may also be encapsulated in a vesicle in a state where a portion of the nucleating agent is exposed. Since the transparent skin layer 21 includes the nucleating agent, it is possible to improve the crystallinity and to improve the wear resistance (scratch resistance) of the decorative sheet 10.

### (Particle diameter of nano-sized nucleating agent)

The nano-sized nucleating agent preferably has an average particle diameter of 1/2 or less of the wavelength region of visible light, specifically, since the wavelength region of visible light is 400 nm or more and 750 nm or less, the average particle diameter is preferably 375 nm or less.

Since nano-sized nucleating agents have extremely small particle diameters, the number of nucleating agents present per unit volume and front surface area increases to be inversely proportional to the cube of the particle diameter. As a result, the distance between each nucleating agent particle becomes closer, thus, when crystal growth occurs from the front surface of one nucleating agent particle added to the resin, the edge of the growing crystal immediately contacts the edge of the crystal growing from the front surface of another nucleating agent particle adjacent to the one nucleating agent particle and the crystal edges inhibit each other's growth to stop each crystal growing. Therefore, the average particle diameter of spherulites in the crystalline part of the crystalline resin is reduced, for example, it is possible to reduce the spherulite size to 1 um or less.

As a result, it is possible to obtain a resin film having high crystallinity and high hardness and the stress concentration between spherulites that occurs during the bending process is efficiently dispersed, thus, it is possible to realize a resin film in which cracking and whitening are suppressed during the bending process.

In a case of simply adding a nucleating agent, the particle diameter increases due to secondary aggregation of the nucleating agent in the resin.

On the other hand, in a case where nucleating agent vesicles are added, the dispersibility in the resin is improved, thus, the number of crystal nuclei with respect to the amount of added nucleating agent increases significantly compared to the case of simply adding a nucleating agent.

For this reason, the average particle diameter of the spherulites in the crystalline part of the resin is reduced and it is possible to suppress the generation of cracking and whitening during the bending process. Thus, adding nucleating agent vesicles makes it possible to further increase the crystallinity and to better achieve both an improved elastic modulus and processability.

The transparent skin layer 21 is, for example, formed of a resin material to which a nucleating agent is added within a range of preferably 0.05 parts by mass or more and 0.5 parts by mass or less and more preferably 0.1 parts by mass or more and 0.3 parts by mass or less, with respect to 100 parts by mass of the polypropylene resin as a main component.

In a case of using nucleating agent vesicles, the amount of the nucleating agent added to the resin material is the added amount in terms of the nucleating agent in the nucleating agent vesicle.

In a case where the added amount of nucleating agent is less than 0.05 parts by mass, there is a concern that the crystallinity of the polypropylene may not be sufficiently improved and the scratch resistance of the transparent skin layer 21 may not be sufficiently improved.

In addition, in a case where the added amount of nucleating agent exceeds 0.5 parts by mass, the spherulite growth of polypropylene is conversely inhibited due to an excess of crystal nuclei and, as a result, there is a concern that the crystallinity of the polypropylene may not be sufficiently improved and the scratch resistance of the transparent skin layer 21 may not be sufficiently improved.

Here, the "main component" refers to the resin material that accounts for 50% by mass or more of the resin material forming the transparent skin layer 21.

### (Method for nano-sizing nucleating agent)

In addition, as methods for nano-sizing nucleating agents, it is possible to use, as appropriate, methods such as solid phase methods in which nucleating agents are mainly mechanically pulverized to obtain nano-sized particles, liquid-phase methods in which nano-sized particles are synthesized or crystallized in a nucleating agent or a solution in which a nucleating agent is dissolved, and gas phase methods in which nano-sized particles are synthesized or crystallized from a nucleating agent or gas or vapor formed of a nucleating agent.

Examples of solid phase methods include ball mills, bead mills, rod mills, colloid mills, conical mills, disk mills, hammer mills, jet mills, and the like.

In addition, examples of liquid-phase methods include crystallization methods, coprecipitation methods, sol-gel methods, liquid-phase reduction methods, hydrothermal synthesis methods, and the like. Furthermore, examples of gas phase methods include electric furnace methods, chemical flame methods, laser methods, thermal plasma methods, and the like.

### (Supercritical reverse phase evaporation method)

The supercritical reverse phase evaporation method is preferable as a method for nano-sizing nucleating agents. The supercritical reverse phase evaporation method is a method for producing capsules (nano-sized vesicles) encapsulating a target substance using carbon dioxide in a supercritical state or under temperature conditions or pressure conditions at the critical point or more.

Carbon dioxide in a supercritical state means carbon dioxide in a supercritical state at the critical temperature (30.98°C) and critical pressure (7.3773 ± 0.0030 MPa) or more and carbon dioxide under temperature conditions or pressure conditions at the critical point or more means carbon dioxide under conditions where only the temperature or only the pressure exceeds the critical conditions.

In addition, as the specific nano-sizing treatment by the supercritical reverse phase evaporation method, first, an aqueous phase was injected into a mixed fluid of supercritical carbon dioxide, phospholipids as outer film forming substances, and nucleating agents as encapsulated substances and stirred to produce an emulsion of supercritical carbon dioxide and an aqueous phase.

Next, reducing the pressure makes the carbon dioxide expand and evaporate to produce an inverted phase, which generates nano-capsules (nano-vesicles) in which the phospholipids cover the front surface of the nucleating agent particles with a single layer film.

By using this supercritical reverse phase evaporation method, unlike the encapsulation methods of the related art in which the outer film is formed of a plurality of films on the nucleating agent particle surfaces, it is possible to easily generate capsules having a single layer film, thus, it is possible to prepare capsules having a smaller diameter.

Nucleating agent vesicles are prepared, for example, by the Bangham method, the extrusion method, the hydration method, the surfactant dialysis method, the reverse phase evaporation method, the freeze-thaw method, the supercritical reverse phase evaporation method, and the like. Among the above, nucleating agent vesicles are preferably adjusted using the supercritical reverse phase evaporation method in particular.

### (Outer film forming nucleating agent vesicle)

The outer film forming the nucleating agent vesicle is formed from, for example, a single layer film. In addition, the outer film is also formed of a substance including biological lipids such as phospholipids, for example.

In the present specification, nucleating agent vesicles in which the outer film is formed of a substance including biological lipids such as phospholipids are referred to as nucleating agent liposomes.

Examples of phospholipids forming the outer film include glycerophospholipids such as phosphatidylcholine, phosphatidylethanolamine, phosphatidylserine, phosphatidic acid, phosphatidylglycerol, phosphatidylinositol, cardiopin, yellow egg lecithin, hydrogenated yellow egg lecithin, soy lecithin, and hydrogenated soy lecithin, and sphingophospholipids such as sphingomyelin, ceramide phosphoryl ethanolamine, ceramide phosphoryl glycerol.

### (Other substances forming outer film)

Examples of other substances forming the outer film of a vesicle include dispersants such as non-ionic surfactants and mixtures of non-ionic surfactants and cholesterols or triacylglycerol.

As the non-ionic surfactants, for example, it is possible to use one type or two or more types of polyglycerol ethers, dialkylglycerine, polyoxyethylene hardened castor oil, polyoxyethylene alkyl ethers, polyoxyethylene sorbitan fatty acid esters, sorbitan fatty acid esters, polyoxyethylene-polyoxypropylene copolymers, polybutadiene-polyoxyethylene copolymers, polybutadiene-poly(2-vinylpyridine), polystyrene-polyacrylic acid copolymers, polyethylene oxide-polyethylethylene copolymers, polyoxyethylene-polycaprolactam copolymers, and the like. As cholesterols, for example, it is possible to use cholesterol, α-cholestanol, β-cholestanol, cholestane, desmosterol (5,24-cholestadiene-3β-ol), sodium cholic acid, cholecalciferol, or the like.

In addition, the outer film of the liposome may be formed from a mixture of phospholipids and a dispersant.

In the decorative sheet 10 of the present embodiment, the nucleating agent vesicle is preferably a radical scavenger liposome provided with an outer film formed of a phospholipid and, by forming the outer film of a phospholipid, it is possible to obtain favorable compatibility between the resin material, which is the main component of the decorative sheet 10, and the vesicle.

The nucleating agent is not particularly limited other than being a substance acting as a starting point for crystallization when the resin crystallizes. Examples of nucleating agents include phosphate ester metal salt, benzoate metal salt, pimelate metal salt, rosin metal salt, benzylidene sorbitol, quinacridone, cyanine blue, talc, and the like. In particular, in order to maximize the effect of the nano-sizing treatment, it is preferable to use phosphate ester metal salt, benzoate metal salt, pimelate metal salt, and rosin metal salt, which are non-melting types and with which it is possible to expect to obtain favorable transparency; however, it is also possible to use colored quinacridone, cyanine blue, talc, and the like in a case where it is possible to make the material itself transparent through a nano-sizing treatment. In addition, a non-melting type nucleating agent may be used in a mixture with a melting type benzylidene sorbitol as appropriate.

### (Features of transparent skin layer 21)

As described above, a feature of the decorative sheet 10 of the present embodiment 1 is the point that the transparent skin layer 21 contains a resin material and a nucleating agent.

In addition, a feature of the decorative sheet 10 of the present embodiment 1 is the point that a nucleating agent encapsulated in a vesicle is added to the resin material to crystallize the resin material when the transparent skin layer 21 is formed. Adding the nucleating agent to the resin composition in a state of being encapsulated in a vesicle has an effect of remarkably improving the dispersibility of the nucleating agent in the resin material, that is, in the transparent skin layer 21. On the other hand, it is assumed that directly identifying the nucleating agent encapsulated in the vesicle by the structure and characteristics of the material in the state where the decorative sheet 10 is finished may be difficult depending on the circumstances and may be said to be impractical. The reasons for the above are as follows.

The nucleating agent added in a state of being in a vesicle is in a dispersion state having high dispersibility and is highly dispersed in the transparent skin layer 21 even in the multi-layer body state, which is the precursor of the produced decorative sheet 10.

However, in the steps for producing the decorative sheet 10, usually, the multi-layer body is subjected to various treatments such as a compression treatment and a curing treatment and such treatments may cause the outer film of the vesicle encapsulating the nucleating agent to be crushed or undergo a chemical reaction.

For this reason, depending on the treatment steps of the decorative sheet 10, the state in which the outer film of the nucleating agent in the finished decorative sheet 10 may be crushed or chemically reacted may vary and there is also a high possibility that the nucleating agent may not be encapsulated (held within) by the outer film.

In a case where the nucleating agent is not encapsulated by the outer film, it is difficult to identify the physical properties of the nucleating agent itself within a numerical range and it is assumed that it may be difficult to determine whether the constituent material of the crushed outer film is the outer film of the vesicle or a material added separately from the nucleating agent.

In this manner, although the present disclosure differs from the related art in the point that the nucleating agent is blended with high dispersion in the decorative sheet 10, whether or not the nucleating agent is added in the state of being encapsulated in a vesicle, it is assumed that, in the state of the decorative sheet 10, it may be impractical to identify the structure and characteristics in numerical ranges analyzed based on measurement.

### (Method for manufacturing decorative sheet 10)

The decorative sheet 10 has the configuration described above and the manufacturing method has the following first to third steps in which the manufacturing is carried out in-line.

Here, since there is no laminating step for laminating films together, "in-line" means that printing, which is usually a plurality of steps, is able to be processed in a single line, that is, one line. That is, it is possible to perform the manufacturing steps from printing to imparting the surface protective layer 60 in one step in an in-line manner.

### (1) First step

The first step is a step for manufacturing the transparent original plate 20, which is a single layer film extrusion molded from the transparent core layer 22 formed using a transparent polypropylene-based thermoplastic resin, and the transparent skin layers 21, which are positioned on the surface and rear surface sides of the transparent core layer 22, respectively, and in which a dispersant as a nano-sized additive is added to the thermoplastic resin.

### (2) Second step

The second step is a step for forming the printed pattern layer 50, the coloring layer 40, and the primer layer 30 in sequence on the rear surface side of the transparent original plate 20 manufactured in the first step.

The layers formed in the second step are not limited to the three layers of the printed pattern layer 50, the coloring layer 40, and the primer layer 30, but, for example, the formed layers may be only one layer including at least the printed pattern layer 50, may be two layers in total, further adding one layer of the coloring layer 40 or the primer layer 30 in addition to the printed pattern layer 50, or may be four layers or more.

### (3) Third step

The third step is a step for forming the surface protective layer 60 on the front surface side of the transparent original plate 20 manufactured in the first step after the second step or prior to the second step.

The order of the steps described above may be either the order of the first step, the second step, and the third step, or the order of the first step, the third step, and the second step.

### (Decorative tack sheet 11)

As illustrated in FIG. 1, the decorative tack sheet 11 is the decorative sheet 10 having the configuration described above, in which the adhesive layer 70 and the release paper 80 are attached on the primer layer 30 side.

### (Decorative panel)

Although not illustrated in the drawings, the decorative panel is the decorative sheet 10 having the configuration described above, to which a substrate is adhered using an adhesive or the like on the primer layer 30 side. In addition, it is also possible to form the decorative panel by peeling off the release paper 80 of the decorative tack sheet 11 in FIG. 1 and directly adhering the substrate to the adhesive layer 70.

Here, the substrate may be formed of any type of wood, steel, resin material, or the like, for example, steel sheets of non-combustible specifications or non-combustible materials specified in Notification No. 1400 of the Ministry of Construction.

### (Other embodiments of layer structure of rear surface side of transparent original plate 20)

The layer structure on the rear surface side of the transparent original plate 20 may take the following forms, which are not illustrated in the drawings.
(a) On the rear surface side of the transparent original plate 20, only the printed pattern layer 50 and the coloring layer 40 may be formed in this sequence.
(b) On the rear surface side of the transparent original plate 20, only the printed pattern layer 50, the coloring layer 40, and the primer layer 30 may be formed in this sequence.

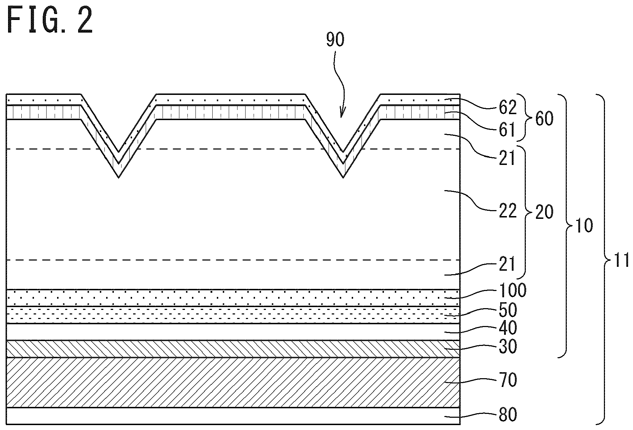

### (Description of embodiment 2 illustrated in FIG. 2)

Using FIG. 2, a description will be given of the decorative sheet 10 according to another embodiment (referred to below as "embodiment 2").

The feature of embodiment 2 is the point that, first, with respect to the embossed portion 90, the embossed portion 90 extends deeply from the surface protective layer 60 into the transparent original plate 20.

That is, the embossed portion 90 of embodiment 1 extends from the front surface of the surface protective layer 60 toward the transparent original plate 20 and reaches the top coating layer 62. In contrast, the embossed portion 90 of the present embodiment 2 extends from the front surface of the surface protective layer 60 toward the transparent original plate 20 and partially penetrates the transparent original plate 20, as illustrated in FIG. 2.

The embossed portion 90 is formed before the resin of the transparent original plate 20 is cured. This is because the hardness of the resin increases after curing.

In comparison with the embossed portion 90 of Embodiment 1, the embossed portion 90 extends to the transparent original plate 20 and thus makes the outline of concave portions clearer and sharper, making it possible to further improve the sense of a three-dimensional design.

### (Second feature of embodiment 2)

The second feature of embodiment 2 is the point that, between the rear surface side of the transparent original plate 20 and the printed pattern layer 50, there is a sealer layer 100 to improve the adhesion of the printed pattern layer 50, as illustrated in FIG. 2.

The material of the sealer layer 100 is, for example, urethane resin, acrylic resin, vinyl chloride resin, or the like. The material of the sealer layer 100 may be a transparent ink from which coloring agents such as dyes or pigments or the like have been removed from the inks used in the printed pattern layer 50. In addition, the sealer layer 100 is formed by, for example, dispersing appropriate additives such as fillers, adhesive agents, plasticizers, stabilizers, dispersants, antifoaming agents, leveling agents, surfactants, and drying agents, as well as solvents or diluents, in a binding agent formed of a synthetic resin.

Since embodiment 2 has the sealer layer 100, it is possible to increase the printability of the transparent original plate 20 and the adhesion with the printed pattern layer 50.

The other points of the present embodiment 2 are marked with the same reference numerals as those of embodiment 1 in FIG. 1 and explanations thereof will be omitted.

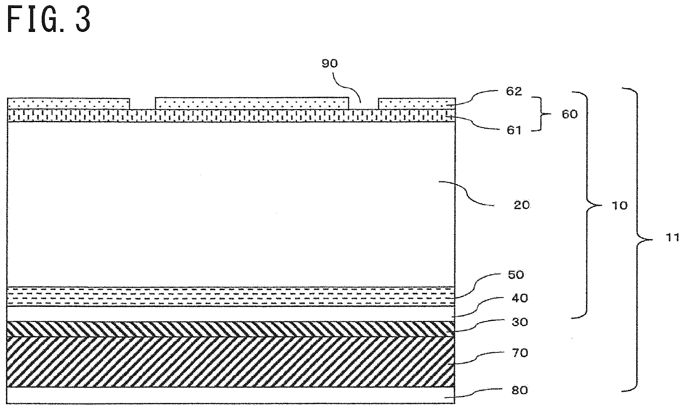

### (Description of embodiment 3 illustrated in FIG. 3)

Using FIG. 3, a description will be given of the decorative sheet 10 according to another embodiment (referred to below as "embodiment 3").

The feature of embodiment 3 is the point that, with respect to the transparent original plate 20, the transparent original plate 20 is formed as a single layer.

That is, in the decorative sheet 10 according to embodiment 1 in FIG. 1, the transparent original plate 20 is formed of three layers of two kinds. In contrast, the transparent original plate 20 of the present embodiment 3 is formed of a single layer, as illustrated in FIG. 3.

The feature of this transparent original plate 20 is the point that a dispersant as a nano-sized additive is added thereto.

In comparison with the transparent original plate 20 having a plurality of layers of embodiment 1, this transparent original plate 20 is a single layer, thus, it is easy to make a thinner film and, furthermore, using a nano-sized additive makes it possible to make the sheet hard even as a thin film.

Other points of the present embodiment 3 are marked with the same reference numerals as those of embodiment 1 in FIG. 1 and explanations thereof will be omitted.

### (Method for Manufacturing Decorative Sheet 10 of Present Embodiment 3)

A description will be given below of the method for manufacturing the decorative sheet 10 of the present embodiment 3.

In the same manner as embodiment 1 described previously, the manufacturing method of the present embodiment 3 has the first to third steps, in which the manufacturing is carried out in-line.

The first step is a step for manufacturing an extrusion molded transparent original plate by adding a dispersant as a nano-sized additive to a transparent polyolefin-based thermoplastic resin. The second step is a step for forming a printed pattern layer on the rear surface side of the transparent original plate manufactured in the first step. The third step is a step for forming a surface protective layer on the front surface side of the transparent original plate after the second step or prior to the second step.

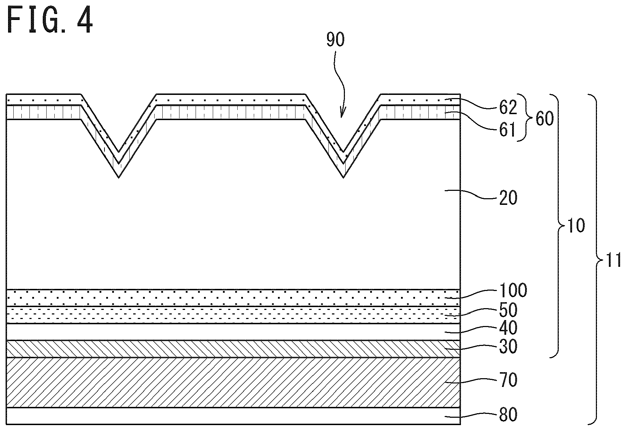

### (Description of embodiment 4 illustrated in FIG. 4)

Using FIG. 4, a description will be given of the decorative sheet 10 according to another embodiment (referred to below as "embodiment 4").

Embodiment 4 combines two features of embodiment 2 and one feature of embodiment 3.

The other points of the present embodiment 4 are marked with the same reference numerals as those of embodiment 1 in FIG. 1, embodiment 2 in FIG. 2, and embodiment 3 in FIG. 3 and explanations thereof will be omitted.

### Examples

A description will be given below of Examples 1 to 3 of the decorative sheet according to the present invention and of Comparative Example 1.

The present invention is not limited to the following Examples 1 to 3.

### (Example 1)

In Example 1, the decorative sheet 10, which is a single layer sheet, was produced using the following materials and procedures.

First, as the transparent core layer 22 of the transparent original plate 20, a blend of a polypropylene resin and a weathering agent is used. For the transparent skin layers 21, a transparent polypropylene resin to which a dispersant or the like as a nano-sized additive was added was used, the transparent skin layer 21: transparent core layer 22: transparent skin layer 21 were extruded simultaneously such that the thickness ratio thereof was 0.5:9:0.5, the thickness of the transparent original plate 20 was 130 um, and the transparent original plate 20 was produced.

Second, on the rear surface side of the transparent original plate 20, a pattern was printed using a urethane-based resin by the gravure printing method to impart the printed pattern layer 50 and then the coloring layer 40 was imparted using a two-component urethane-based resin.

Third, the primer layer 30 was formed by coating a urethane-based resin to have a solid content of 1 g/m² by the gravure printing method.

Fourth, after being subjected to an antiviral treatment, as the surface protective layer 60, the undercoat layer 61 was formed by coating an acrylic two-component curable resin having low gloss (acrylic urethane resin manufactured by DIC Graphics Corporation) to a thickness of 6 um and, on top thereof, the top coating layer 62 was formed in which the same resin with high gloss was printed with a pattern synchronized with the printed pattern layer 50.

In addition, the surface protective layer 60 is subjected to an antiviral treatment.

Fifth, a 3 mm-thick MDF board was coated with a water-based urethane-based adhesive, fixed to the decorative sheet 10, and pressed at 30°C to 50°C using a press machine to make a decorative panel, which was the evaluation sheet in Example 1.

### (Example 2)

Example 2 was the same as Example 1 except that the thickness of the transparent original plate 20 was reduced from 130 um to 50 um to create the evaluation sheet of Example 2.

### (Example 3)

For the transparent original plate 20, a blend of a polypropylene resin and a weathering agent was used, the transparent polypropylene resin to which a dispersant or the like as a nano-sized additive was added was extrusion molded, the thickness of the transparent original plate 20 of Example 3 was 100 um and the transparent original plate 20 was produced.

### (Comparative example 1)

Comparative Example 1 differs from Example 1 and Example 2 mainly in the point that a dispersant or the like as a nano-sized additive is not added to the transparent original plate 20.

Although not illustrated in the drawings, in Comparative Example 1, the decorative sheet 10 was produced using the following materials and procedures.

First, a pigment-blended colored polyethylene sheet (manufactured by Riken Technos Corporation) having a thickness of 55 um was used as the transparent original plate and a pattern printing layer was formed using urethane ink (Lamister manufactured by Toyo Ink Manufacturing Company) by gravure printing.

Second, a homopolypropylene resin (manufactured by Prime Polymer Co., Ltd.) was extrusion-laminated as a 70 µm transparent PP layer on the pattern printing layer, the same acrylic two-component curable resin (acrylic urethane resin manufactured by DIC Graphics Corporation) as in Example 1 was further coated thereon as front surface protection to a thickness of 6 µm, and a decorative sheet was produced in which the same primer layer as in Example 1 was further coated on the rear surface of a colored original plate layer.

Third, a 3 mm-thick MDF board was coated with a water-based urethane-based adhesive, fixed to the rear surface of the decorative sheet, and pressed at 30°C to 50°C using a press machine to make a decorative panel, which was used as the evaluation sheet in Comparative

### Example 1.

### (Evaluation method and evaluation criteria)

The evaluation method of the evaluation sheet produced as described above is as follows.
(1) Scratch test
(2) Scratch hardness test (pencil hardness)

### (Scratch test)

For the scratch test, a coin scratch test was performed on each of the evaluation sheets and the loads when no continuous scratch marks were produced on the front surface of the evaluation sheet were measured.

In the scratch test, a test was performed in which a 10-yen coin was applied to the front surface of the evaluation sheet and, starting the test with a load of 1 kg, the load was gradually increased by 1 kg at a time, up to 4 kg.

### (Scratch hardness test)

For the scratch hardness test, the hardness of the hardest pencil (pencil hardness) that did not produce any scratch marks on the front surface of the evaluation sheet was measured for each of the evaluation sheets by the scratch hardness (pencil method) test specified in JIS K5600-5-4:1999.

### (Evaluation criteria)

In the scratch test, a load of "1 kg" or more was acceptable and anything else was unacceptable.

In the scratch hardness test, a pencil hardness of "2B" or higher was acceptable and anything else was unacceptable.

### (Evaluation results)

The evaluation results of the evaluation sheets are illustrated in Table 1 below.

**[Table 1]**

| | Polypropylene layer (transparent original plate) | Evaluation results | |
|---|---|---|---|
| | | Scratch test [load] | Scratch hardness test [pencil hardness] |
| Ex. 1 | Back-printed single layer sheet 130 µm with added nano-sized additive or the like | 2 kg | HB |
| Ex. 2 | Back-printed single layer sheet 50 µm with added nano-sized additive or the like | 1 kg | 2B |
| Ex. 3 | Back-printed single layer sheet 100 µm with added nano-sized additive or the like | 2 kg | HB |
| Comp. Ex. 1 | Sheet having a plurality of layers with no added nano-sized additive or the like color PE 55 µm/transparent PP 70 µm | 1 kg | 4B |

### (Examples 1 to 3 and comparative example 1)

Among the total of the four evaluation sheets of Examples 1 to 3 and Comparative Example 1, only all three evaluation sheets of Examples 1 to 3 were "acceptable".

The one remaining evaluation sheet of Comparative Example 1 had a pencil hardness (pencil hardness) of "4B" and was "unacceptable".

It is possible to assume that the reason is the point that a dispersant or the like as a nano-sized additive was not added to the transparent original plate 20 in Comparative Example 1.

In addition, it is possible to assume that the differences that came out in the scratch test and the scratch hardness test in Examples 1 to 3 are due to the influence of the thickness of the evaluation sheets. That is, the thicknesses of the evaluation sheets in Example 1 and Example 3 are thicker than that in Example 2 and it is possible to assume that a thicker sheet is more advantageous in the scratch test and scratch hardness test.

Furthermore, the thickness of the transparent original plate 20 in Example 3 is "100 um," which is formed to be thinner than the "130 µm" of Example 1. Despite the thickness of the transparent original plate 20 in Example 3 being thin, evaluation results equivalent to those of Example 1 are obtained.

### Reference Signs List

- 10: decorative sheet
- 11: decorative tack sheet
- 20: transparent original plate
- 21: transparent skin layer
- 22: transparent core layer
- 30: primer layer
- 40: coloring layer
- 50: printed pattern layer
- 60: surface protective layer
- 61: undercoat layer
- 62: top coating layer
- 70: adhesive layer
- 80: release paper
- 90: embossed portion
- 100: sealer layer

## Claims

1. A decorative sheet comprising:
a transparent original plate formed of a transparent olefin sheet, wherein
a pattern layer on which a pattern is printed is formed on a rear surface side of the transparent original plate,
a surface protective layer is formed on a front surface side of the transparent original plate,
a laminate layer formed of another film is not present on either the front surface side or the rear surface side of the transparent original plate, and
a dispersant as a nano-sized additive is added to the transparent original plate.

2. The decorative sheet according to claim 1, wherein the printed pattern layer and a concealing layer are formed in sequence on the rear surface side of the transparent original plate.

3. The decorative sheet according to claim 1 or claim 2, wherein a primer layer is formed on the rear surface side of the transparent original plate at a side farthest away from the printed pattern layer.

4. A decorative sheet comprising:
a transparent original plate formed of a transparent olefin sheet, wherein
only a printed pattern layer on which a pattern is printed and a concealing layer are formed in this sequence on a rear surface side of a transparent original plate,
only a surface protective layer is formed on a front surface side of the transparent original plate, and
a dispersant as a nano-sized additive is added to the transparent original plate.

5. A decorative sheet, comprising:
a transparent original plate formed of a transparent olefin sheet, wherein
only a printed pattern layer on which a pattern is printed, a concealing layer, and a primer layer are formed in this sequence on a rear surface side of a transparent original plate,
only a surface protective layer is formed on a front surface side of the transparent original plate, and
a dispersant as a nano-sized additive is added to the transparent original plate.

6. The decorative sheet according to any one of claims 1 to 5, wherein the transparent original plate is three layers of two kinds deposited in a sequence of a transparent skin layer, a transparent core layer, and a transparent skin layer.

7. The decorative sheet according to claim 6, wherein the dispersant is added to the transparent skin layers.

8. The decorative sheet according to any one of claims 1 to 7, wherein a sealer layer for improving adhesion with the printed pattern layer is formed between the rear surface side of the transparent original plate and the printed pattern layer.

9. The decorative sheet according to any one of claims 1 to 8, wherein the dispersant as a nano-sized additive includes a nucleating agent vesicle in which a nano-sized nucleating agent is encapsulated in the vesicle.

10. The decorative sheet according to any one of claims 1 to 9, wherein an inorganic filler is added to the transparent skin layer.

11. The decorative sheet according to any one of claims 1 to 10, wherein an embossed portion synchronized with the pattern is formed on a front surface side of the surface protective layer.

12. The decorative sheet according to claim 11, wherein the embossed portion extends from the front surface side of the surface protective layer toward the transparent original plate and partially penetrates the transparent original plate.

13. The decorative sheet according to any one of claims 1 to 12, wherein the printed pattern layer is a single color.

14. A decorative tack sheet using the decorative sheet according to claim 3 or claim 5, wherein an adhesive layer and a release paper are formed on the primer layer side of the decorative sheet.

15. A decorative panel using the decorative sheet according to claim 3 or claim 5, wherein a substrate is adhered to the primer layer side of the decorative sheet.

16. A manufacturing method for decorative sheets comprising:
a first step for manufacturing a transparent original plate formed by extrusion molding a transparent polyolefin-based thermoplastic resin to which a dispersant as a nano-sized additive is added;
a second step for forming a printed pattern layer on a rear surface side of the transparent original plate manufactured in the first step; and
a third step for forming a surface protective layer on a front surface side of the transparent original plate after the second step or before the second step,
wherein the manufacturing is carried out in-line.

17. A manufacturing method for decorative sheets comprising:
a first step for manufacturing a transparent original plate formed by extrusion molding a transparent core layer using a transparent polypropylene-based thermoplastic resin and transparent skin layers in which a dispersant as a nano-sized additive is added to the thermoplastic resin, each positioned on the surface and rear surface sides of the transparent core layer;
a second step for forming a printed pattern layer on a rear surface side of the transparent original plate manufactured in the first step; and
a third step for forming a surface protective layer on a front surface side of the transparent original plate after the second step or before the second step,
wherein the manufacturing is carried out in-line.

18. The manufacturing method for decorative sheets according to claim 16 or claim 17, wherein, in the second step, the printed pattern layer and a concealing layer are formed in this sequence on the rear surface side of the transparent original plate.

19. The manufacturing method for decorative sheets according to any one of claims 16 to 18, wherein, in the second step, a primer layer is formed on the rear surface side of the transparent original plate at a side farthest away from the printed pattern layer.

20. The manufacturing method for decorative sheets according to any one of claims 16 to 19, wherein, in the first step, the dispersant as a nano-sized additive includes a nucleating agent vesicle in which a nano-sized nucleating agent is encapsulated in the vesicle.
